# FASCICULE DE BREVET EUROPEEN

(11) **EP 3 383 590 B1**
(45) Date de publication et mention de la délivrance du brevet: **30.10.2019**
(21) Numéro de dépôt: 16812910.4
(22) Date de dépôt: 28.11.2016
(51) Int. Cl.: B25F 5/02, H02J 7/00, H01M 2/10

(54) **SUPPORT DE BATTERIE UNIVERSEL POUR OUTILLAGE ELECTROPORTATIF**
UNIVERSELLER BATTERIEHALTER FÜR TRAGBARES ELEKTROWERKZEUG
UNIVERSAL BATTERY MOUNT FOR PORTABLE ELECTRIC POWER TOOL

(30) Priorité: 30.11.2015 FR 1561540
(43) Date de publication de la demande: 10.10.2018
(73) Titulaire: Mu, Voung, Vui, 98809 Montdore (NC)
(72) Inventeur: Mu, Voung, Vui, 98809 Montdore (NC)
(74) Mandataire: Aquinov
(86) Numéro de dépôt international: PCT/EP2016/078986
(87) Numéro de publication internationale: WO 2017/093177

(56) Documents cités:
- EP-A2- 2 003 761
- EP-A2- 2 595 273
- US-A1- 2002 089 306
- US-A1- 2002 125 857
- US-A1- 2008 135 272
- US-A1- 2011 147 031
- US-A1- 2014 159 920

## Description

La présente invention concerne un support de batterie pour outillage électroportatif, ainsi qu'un outillage électroportatif équipé d'un tel support de batterie.

Les outillages électroportatifs autonomes qui sont de plus en plus répandus, constituent des outils électriques comportant une batterie qui permet d'intervenir sur un chantier sans utiliser de câble de raccordement à un réseau d'alimentation électrique.

On peut donc se déplacer en tout point du chantier sans avoir à brancher l'appareil sur une prise électrique, et sans utiliser de câbles de raccordement qui peuvent être gênant, ou même dangereux en restant dans le passage. On peut aussi utiliser ces outillages électroportatifs dans des chantiers ne disposant pas d'alimentation électrique.

On réalise aujourd'hui des outillages électroportatifs proposant un grand nombre de fonctions, comprenant notamment des perceuses, des visseuses, des scies sauteuses, des scies circulaires, des ponceuses, des disqueuse ou des meuleuses. Les outillages électroportatifs sont produits par un nombre important de fabricants, présentant du matériel pour amateurs comme pour professionnels, dans des gammes de prix variés.

Pour un professionnel utilisant fréquemment ces outillages électroportatifs, il est courant de prévoir deux batteries pour chaque appareil afin d'en mettre une en charge quand l'autre est utilisée, ce qui permet de disposer toujours d'une source d'énergie chargée évitant un arrêt de l'outillage.

Un problème qui se pose pour ces outillages est que les grands fabricants ont développé chacun leurs types de batterie présentant une connexion spécifique sur leurs appareils. De plus chez un même fabricant on peut avoir des types de batterie différents correspondant notamment à des capacités de charge variées.

Le professionnel utilisant un certain nombre d'outillages électroportatifs est alors soumis à un problème de variété des modèles de batteries, en particulier s'il veut optimiser chaque type d'appareil en le choisissant parmi différents constructeurs pour obtenir la meilleure rapidité et efficacité pour son travail spécifique.

La gestion des batteries pour ces différents outillages, avec si nécessaire leurs batteries de rechange, devient alors compliquée. Il faut notamment des chargeurs différents pour s'adapter aux types de batterie. Les batteries peuvent difficilement être mutualisées pour l'ensemble du parc d'outillages électroportatif.

De plus, un autre problème peut se poser également lorsqu'on veut renouveler les batteries d'outillages vieillissants, elles peuvent ne plus être sur le marché, ou être trop coûteuses au regard du prix d'un outillage neuf complet proposé par les fabricants. Par conséquent, ceci oblige indirectement les utilisateurs à s'orienter vers un outillage neuf, et ainsi à se débarrasser de leurs machines vieillissantes mais cependant toujours opérationnelles.

Ces batteries ayant des durées de vie limitées, on ne peut pas passer une batterie d'un type d'appareil à l'autre si cette batterie n'est pas compatible entre deux générations, ce qui complique d'autant plus la gestion du renouvellement de ces éléments, ce qui complique la gestion du renouvellement de ces éléments.

La présente invention a notamment pour but d'éviter ces inconvénients de la technique antérieure.

Elle propose à cet effet un support de batterie prévu pour alimenter un outillage électroportatif spécifique avec une batterie rechargeable, ce support étant remarquable en ce qu'il comporte un sabot prévu pour maintenir une batterie standard, et une semelle de contact spécifique équipée de connexions électriques qui la traversent, cette semelle de contact comprenant d'un côté une face standard prévue pour s'ajuster sur le sabot, présentant une première extrémité des connexions électriques venant sur le sabot ou sur la batterie standard, et comprenant de l'autre côté une face spécifique prévue pour s'ajuster sur l'outillage électroportatif spécifique, présentant une deuxième extrémité des connexions électriques venant au contact des bornes de l'outillage.

Un avantage de ce support de batterie est que de manière simple, en prévoyant plusieurs semelles de contacts adaptées chacune à un type d'outillage spécifique, qui peuvent être produites de manière économique, on utilise alors toujours la même batterie ce qui permet d'utiliser un modèle unique standard de batterie pour une grande variété d'appareils.

La gestion des batteries est alors très simplifiée pour le professionnel ou le particulier grâce au modèle standard de batterie utilisé, ce qui permet par exemple de prévoir un nombre de batteries d'avance mises en recharge inférieur au nombre d'appareils, sans risquer d'être à court d'autonomie. Par ailleurs, cette invention pourra avantageusement remettre en service les outils dont les batteries ne sont plus disponibles.

Le support de batterie selon l'invention peut comporter de plus une ou plusieurs des caractéristiques suivantes, qui peuvent être combinées entre elles.

Avantageusement, le sabot comporte des glissières parallèles prévues pour recevoir et fixer la batterie.

En particulier, le sabot et la semelle de contact comportent chacun une encoche de retenue, ces encoches étant prévues pour recevoir un loquet de blocage commun. Avantageusement, la semelle de contact comporte des lames de contact traversant une plaque de semelle, formant les connexions électriques.

Dans ce cas, le sabot peut comporter des lames de contact indépendantes des connexions électriques de la semelle, qui viennent au contact de ces connexions électriques. Avantageusement, le support de batterie comporte des glissières parallèles de liaison de la semelle sur le sabot. On fixe de manière simple et rapide la batterie sur le sabot.

Selon un mode de réalisation, le sabot comporte un circuit électronique réalisant une adaptation de la tension délivrée par la batterie. On peut de cette manière adapter la même batterie sur des outillages comportant différentes tensions.

Selon un mode de réalisation, le circuit électronique comporte un sélecteur manuel réalisant l'adaptation de la tension délivrée.

Selon un autre mode de réalisation, le circuit électronique comporte un moyen automatique d'adaptation de la tension délivrée.

En complément, le sabot peut comporter un afficheur affichant la tension délivrée à l'outillage spécifique. On peut de cette manière régler manuellement la tension délivrée par la batterie. En option, le sabot peut comporter une prise électrique permettant le branchement d'un chargeur de la batterie, qui alimente l'outillage en l'absence de batterie.

L'invention a aussi pour objet un outillage électroportatif utilisant une batterie rechargeable, comportant un support de batterie comprenant l'une quelconque des caractéristiques précédentes.

D'autres caractéristiques et avantages ressortiront de la description qui va suivre de l'invention, donnée à titre d'exemple uniquement, en regard des dessins annexés sur lesquels:
- la figure 1 présente une perceuse électroportative comportant un support de batterie selon l'invention ;
- la figure 2 présente le montage de la semelle de contact spécifique de ce support de batterie sur son sabot universel ;
- les figures 3a et 3b présentent une lame de contact des connexions électriques de la semelle de contact spécifique, successivement vue de face et de côté ;
- les figures 4 et 5 présentent deux semelles de contact spécifiques différentes ;
- la figure 6 et une vue de dessous du sabot universel ;
- les figures 7 et 8 présentent respectivement ce sabot en vue de dessus et en vue de côté ; et
- la figure 9 présente en coupe verticale un support de batterie suivant une variante.

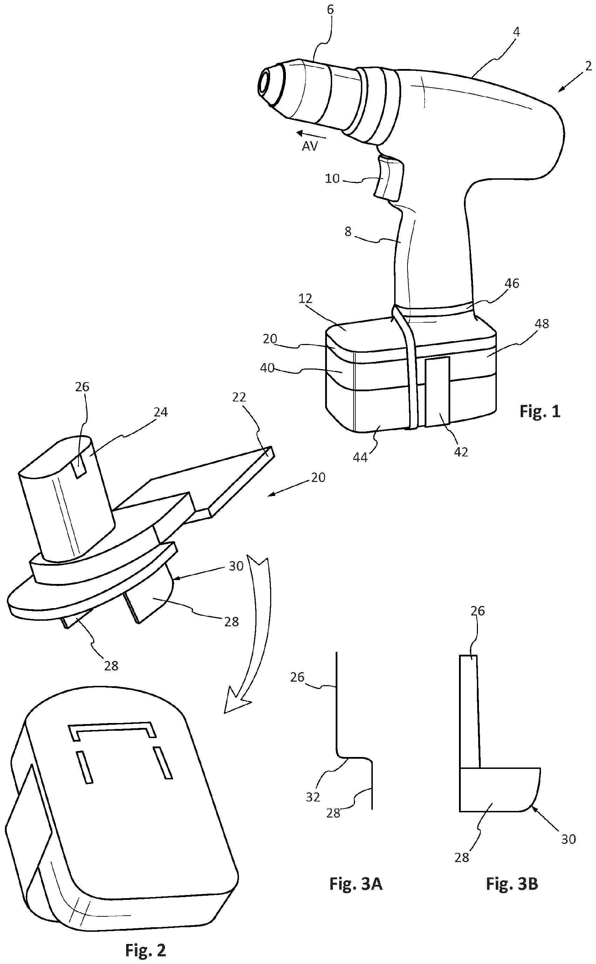

La figure 1 présente une perceuse électroportative 2 comportant un corps principal 4 contenant une motorisation qui entraîne un mandrin 6 disposé du côté avant indiqué par la flèche « AV ». La direction avant - arrière est appelée par convention direction longitudinale. Par convention l'outillage est représenté verticalement, l'outil étant au-dessus, et le support de batterie étant en dessous.

Le corps principal 4 se prolonge en dessous par une poignée 8, présentant en partie supérieure une gâchette de commande 10 disposée du côté avant. La partie inférieure de la poignée 8 se prolonge par une embase large 12, comportant une base plate formant un rectangle aux angles arrondis.

Une semelle de contact spécifique 20 forme une plaque fixée en-dessous de l'embase large 12 de la poignée 8, comportant un contour s'ajustant sensiblement sur le contour particulier de cette embase.

Un sabot universel 40 fixé en-dessous de la semelle de contact spécifique 20, comporte vers le bas une ceinture horizontale de calage 48 faisant une partie du tour d'une batterie qui est standard 44, et une ceinture verticale de maintien 42 entourant cette batterie pour la maintenir dans ce sabot.

La batterie 44 est dite standard car prévue pour s'adapter sur différents types d'outillages électroportatifs, comprenant des connexions sur des batteries présentant des formes variées. Le sabot universel 40 est fixé sur la perceuse 2 par une sangle 46 faisant le tour de l'embase large 12 de cette perceuse, afin de maintenir sans modifier la perceuse le support de batterie complet comprenant le sabot universel 40 avec sa batterie 44, ainsi que la semelle de contact spécifique 20, qui sont plaqués en dessous de cette embase
La figure 2 présente la semelle de contact spécifique 20 comportant une plaque de semelle sensiblement plate 22 s'ajustant sur le contour de l'embase 12 de la poignée 8, comportant sur le dessus une colonnette 24 prévue pour s'ajuster dans un logement correspondant en dessous de cette embase.

Deux lames de contact 26 parallèles insérées verticalement dans la colonnette 24, présentent chacune une partie supérieure laissée libre pour venir en contact avec une borne de l'appareil électroportatif 2 disposée dans la poignée 8 quand la semelle de contact 20 est fixée en-dessous, afin d'établir une connexion électrique avec la motorisation de cet appareil. Chaque lame de contact 26 comporte une partie inférieure large 28 dépassant en dessous de la plaque de semelle 22, présentant un côté inférieur arrondi 30.

Les figures 3a et 3b présentent une lame de contact 26 comportant une partie horizontale 32 formée par deux pliages à 90°, disposée juste au-dessus de la partie inférieure large 28, venant en appui en dessous de la plaque de semelle 22 de manière à se caler sur cette plaque, et à réaliser un écartement entre les parties inférieures correspondant à celui des contacts de la batterie 44.

La partie supérieure des lames de contact 26 est adaptée en fonction de la semelle de contact 20, qui est spécifique pour chaque type d'outillage, la partie inférieure restant constante car étant prévue pour les mêmes batteries standard 44.

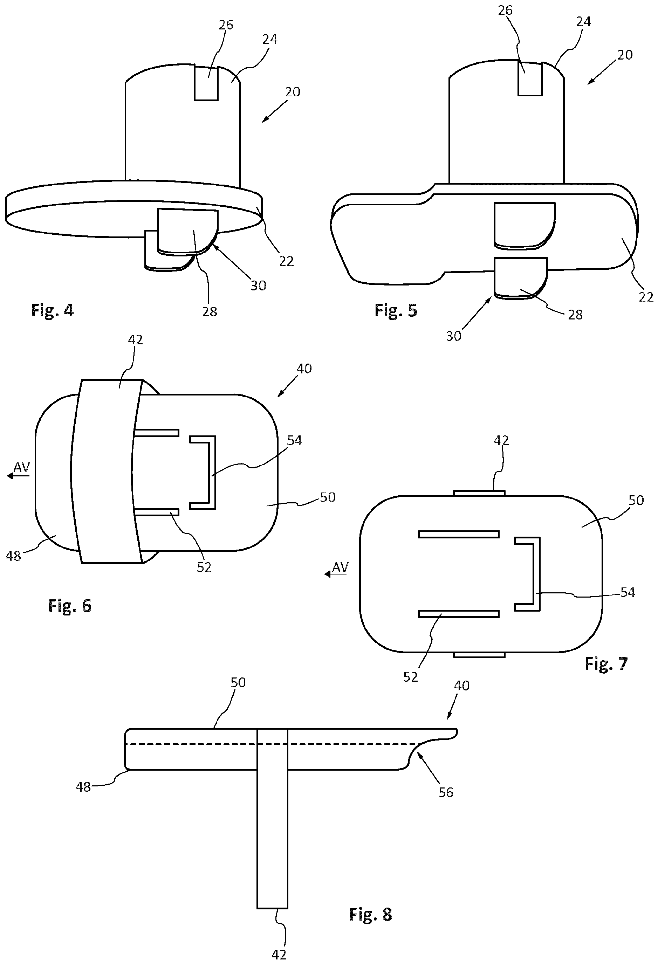

La figure 4 présente une variante de semelle de contact spécifique 20, adaptée pour une perceuse de marque « Makita », comprenant une plaque de semelle 22 présentant un contour ovale de faible longueur, et une colonnette 24 de grande largeur par rapport à ce contour.

La figure 5 présente une variante de semelle de contact spécifique 20, adaptée pour une perceuse de marque « Ryobi », comprenant une plaque de semelle 22 présentant un contour de grande longueur, et une colonnette 24 de faible largeur rapport à ce contour.

Les figures 2, 6, 7 et 8 présentent un sabot universel 40 comportant une plaque de sabot 50 au contour rectangulaire comportant des bords arrondis, comprenant sur le côté avant et sur les deux côtés latéraux la ceinture horizontale de calage 48 présentant une hauteur d'environ 1cm. La ceinture horizontale 48 s'arrête vers l'arrière des côtés latéraux, pour se terminer par un arrondi concave 56 revenant vers la plaque de sabot 50, afin de laisser la partie arrière de cette ceinture formant un creux.

La ceinture verticale 42 forme une bande transversale présentant une largeur d'environ 1cm, disposée au milieu du sabot universel 40, comprenant ses extrémités fixées de chaque côté de la plaque de sabot 50 sur la ceinture horizontale 48.

La batterie standard 44 est introduite par l'arrière dans la ceinture horizontale 48 en profitant du creux de la partie arrière laissé libre, pour s'ajuster dans la ceinture verticale 48 formant une boucle qui la maintient.

La plaque de sabot 50 comporte de manière symétrique par rapport à l'axe longitudinal, vers l'arrière, une encoche de retenue 54 formant une découpe de largeur constante présentant une barre transversale comportant à chaque extrémité un petit retour tourné vers l'avant. L'encoche de retenue 54 présente sur le sabot et la semelle, sert à retenir par clipsage dedans la batterie 44 dont la partie saillante du loquet poussoir est suffisamment longue pour les « mordre » simultanément l'une et l'autre, quand elle est insérée vers l'avant dans le sabot universel 40.

La plaque de sabot 50 comporte de manière symétrique par rapport à l'axe longitudinal, deux fentes parallèles à cet axe 52 qui reçoivent chacune de manière ajustée la partie inférieure large 28 d'une lame de contact 26. Le côté inférieur arrondi 30 de cette partie large 28 sert à faciliter l'introduction dans des connecteurs de la batterie 44, de manière à assurer une continuité électrique de chaque pôle de cette batterie par l'intermédiaire des lames de contact 26, vers les bornes de l'appareil électroportatif.

En particulier, le client peut acheter un kit comprenant le sabot universel 40 qui est standard, et la semelle de contact spécifique 20 qu'il a choisi en fonction de son appareil électroportatif spécifique, puis il va lui-même assembler ces deux éléments entre eux selon un système de verrouillage mécanique.

Pour cela le kit comprend un moyen d'assemblage, comprenant par exemple deux vis de serrage livrées avec.

En variante le moyen d'assemblage peut comporter tout autre système, comprenant par exemple un clipsage de ces deux éléments entre eux, qui conserve l'avantage de ne pas nécessiter de composant additionnel.

Par ailleurs le moyen de fixation du support de batterie sur la perceuse 2, comprenant dans cet exemple la sangle 46 entourant la poignée 8, peut comporter tout autre système de fixation rapide.

Avantageusement le sabot universel 40 et la semelle de contact 20 sont formés par un moulage de matière plastique, qui permet de réaliser de manière économique des formes complexes. On réalise ainsi un support de batterie qui est peu cher, permettant notamment à un utilisateur de prévoir un nombre réduit de batteries standard par rapport à un parc d'outillage électroportatif venant de différents constructeurs ou de différentes générations, grâce à la mise en commun de ces batteries.

De même, on a identifié les outillages électroportatifs, mais ce domaine inclut tous les appareils portatifs comme par exemple des aspirateurs, des lampes de camping, des véhicules électriques pour enfant ou des pompes de transvasement, c'est-à-dire tout appareillage autonome incluant une batterie ou accumulateur comme source d'énergie.

En fonction des gammes d'appareils il se peut aussi que le nombre de contacts traversant le support de batterie pour relier la batterie à l'appareil varie suivant le type d'appareil, mais ceci est inclus dans la présente demande de brevet puisqu'il suffit de prévoir le nombre de contacts correspondant.

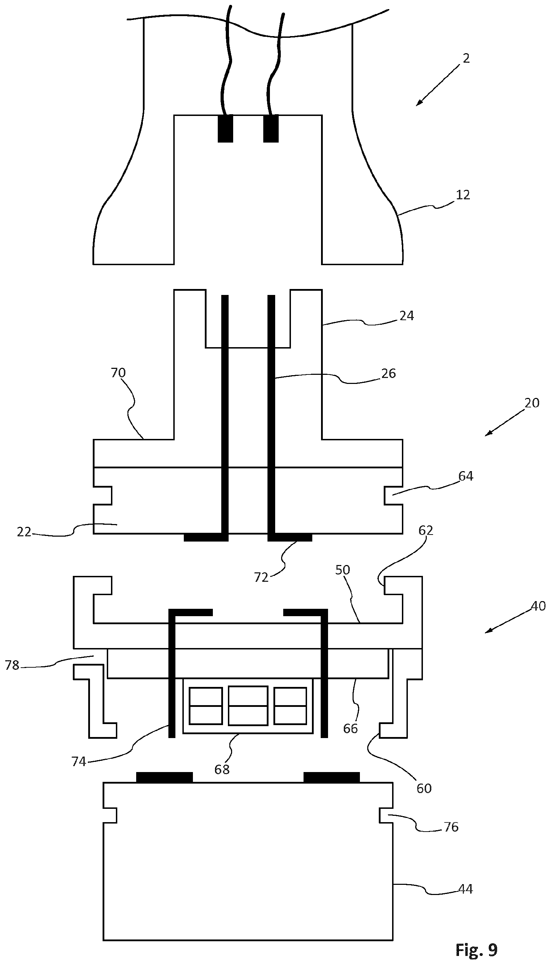

La figure 9 présente une semelle 20 comportant une plaque de semelle 22 qui est standard, recevant au-dessus une adaptation 70 spécifique pour un outillage électroportatif 2, présentant la colonnette 24 prévue pour s'engager dans un creux correspondant de l'embase 12 de cet outillage.

Les lames de contact 26 traversent la semelle 20, en se terminant en dessous de la plaque de semelle 22 par un pliage posé à plat 72 sous cette plaque.

Le sabot universel 40 comporte sur le dessus d'une plaque 50 de chaque côté une glissière supérieure 62 venant s'ajuster dans une rainure 64 formée sur un côté de la plaque de semelle 22 pour assurer un montage rapide sans utiliser d'outil. En particulier les glissières supérieures 62 peuvent être formées dans une tôle métallique fixée sur le sabot réalisé par un moulage d'une matière plastique.

Le sabot 40 comporte des lames de contact 74 le traversant, qui présentent sur le dessus un pliage posé à plat venant en appui sur le pliage correspondant 72 de la semelle 20 quand le sabot est mis en position. La base des lames de contact 74 disposée verticalement, s'ajuste dans une connexion de la batterie 44 lors de son montage.

Le sabot 40 comporte en dessous de chaque côté une glissière inférieure 60 venant s'ajuster dans une rainure 76 formée sur le côté de la batterie 44, pour assurer un montage rapide sans utiliser d'outil.

Le sabot 40 comporte en dessous de sa plaque 50 un système électronique 66 qui assure notamment une modification de la tension délivrée par la batterie 44 afin de l'adapter à la tension demandée par l'outillage 2.

On peut prévoir en particulier une adaptation manuelle de la tension, à l'aide d'un sélecteur manuel de commande, et d'un afficheur 68 qui présente la tension de sortie. Avantageusement le sélecteur manuel est monté sur le sabot 40 de manière à ne plus être accessible une fois la batterie fixée sur l'outillage 2 qui est prêt à fonctionner.

Le sabot 40 comporte sur un côté une prise électrique 78 permettant de le relier à un chargeur de batterie qui est relié sur le réseau de distribution d'électricité, afin d'alimenter l'outillage 2 sans que la batterie 44 soit insérée dans le sabot.

En particulier, la semelle de contact 20 peut comporter de manière intégrée l'adaptation spécifique 70 et la plaque de semelle 22, réalisées dans un même moulage d'une matière plastique. De la même manière le sabot 40 peut comporter sa plaque 50, les glissières inférieures 60 et les glissières supérieures 62 réalisées dans un même moulage d'une matière plastique.

## Revendications

1. Support de batterie prévu pour alimenter un outillage électroportatif spécifique (2) avec une batterie (44) rechargeable, comportant un sabot (40) prévu pour maintenir la batterie (44), et une semelle de contact spécifique (20) équipée de connexions électriques (26) qui la traversent, **caractérisé en ce que** la semelle de contact (20) est amovible par rapport au sabot et le sabot est conçu pour fixer de manière amovible la batterie qui est standard, la semelle comprenant d'un côté une face standard prévue pour s'ajuster sur le sabot (40), présentant une première extrémité (28) des connexions électriques (26) venant sur le sabot (40) ou sur la batterie standard (44), et comprenant de l'autre côté une face spécifique prévue pour s'ajuster sur l'outillage électroportatif spécifique (2), présentant une deuxième extrémité des connexions électriques (26) configurée pour venir au contact des bornes de l'outillage.

2. Support de batterie selon la revendication 1, **caractérisé en ce que** le sabot (40) comporte des glissières parallèles (60) prévues pour recevoir et fixer la batterie (44).

3. Support de batterie selon la revendication 1 ou 2, **caractérisé en ce que** le sabot (40) et la semelle de contact (20) comportent chacun une encoche de retenue (54), ces encoches étant prévues pour recevoir un loquet de blocage commun.

4. Support de batterie selon l'une quelconque des revendications précédentes, **caractérisé en ce que** la semelle de contact (20) comporte des lames de contact traversant une plaque de semelle (22), formant les connexions électriques (26).

5. Support de batterie selon la revendication 4, **caractérisé en ce que** le sabot (40) comporte des lames de contact (74) indépendantes des connexions électriques (26) de la semelle (20), qui sont configurées pour venir au contact de ces connexions électriques.

6. Support de batterie selon l'une quelconque des revendications précédentes, **caractérisé en ce qu'**il comporte des glissières parallèles (62) de liaison de la semelle (20) sur le sabot (40).

7. Support de batterie selon l'une quelconque des revendications précédentes, **caractérisé en ce que** le sabot (40) comporte un circuit électronique (66) configuré pour réaliser une adaptation de une tension délivrée par la batterie (44).

8. Support de batterie selon la revendication 7, **caractérisé en ce que** le circuit électronique (66) comporte un sélecteur manuel configuré pour réaliser l'adaptation de la tension délivrée.

9. Support de batterie selon la revendication 7, **caractérisé en ce que** le circuit électronique (66) comporte un moyen automatique d'adaptation de la tension délivrée.

10. Support de batterie selon l'une quelconque des revendications précédentes, **caractérisé en ce que** le sabot (40) comporte un afficheur (68) configuré pour afficher la tension délivrée à l'outillage spécifique (2).

11. Support de batterie selon l'une quelconque des revendications précédentes, **caractérisé en ce que** le sabot (40) comporte une prise électrique (78) configurée pour permettre le branchement d'un chargeur de la batterie (44), qui alimente l'outillage (2) en l'absence de batterie.

12. Outillage électroportatif utilisant une batterie rechargeable (44), **caractérisé en ce qu'**il comporte un support de batterie selon l'une quelconque des revendications précédentes.

## Patentansprüche

1. Akku-Halterung für die elektrische Versorgung eines spezifischen tragbaren Elektrowerkzeugs (2) mit einem aufladbaren Akku (44), einen Führungsschuh (40) zum Halten des Akkus (44) umfassend, sowie einen spezifischen Kontaktschuh (20) mit ihn durchquerenden elektrischen Anschlüssen (26), **dadurch gekennzeichnet, dass** der Kontaktschuh in Bezug zum Führungsschuh auswechselbar ist und der Führungsschuh derart gestaltet ist, dass der Standard-Akku auswechselbar fixiert werden kann, wobei der Kontaktschuh auf der einen Seite eine Standardseite aufweist, die am Führungsschuh (40) justiert werden kann, und dazu ein erstes Ende (28) der elektrischen Anschlüsse (26) bis zum Führungsschuh (40) oder bis zum Standard-Akku (44) reicht, und auf der anderen Seite eine spezifische Seite aufweist, die sich dem spezifischen tragbaren Elektrowerkzeug (2) anpasst, ein zweites Ende der elektrischen Anschlüsse (26) aufweisend, das derart gestaltet ist, dass es zu den Anschlussklemmen des Werkzeuges einen Kontakt herstellt.

2. Akku-Halterung nach Anspruch 1, **dadurch gekennzeichnet, dass** der Führungsschuh (40) parallele Gleitschienen (60) umfasst, die zur Aufnahme und Fixierung des Akkus (44) vorgesehen sind.

3. Akku-Halterung nach Anspruch 1 oder 2, **dadurch gekennzeichnet, dass** der Führungsschuh (40) und der Kontaktschuh (20) jeweils eine Haltenut (54) aufweisen, die zur Aufnahme einer gemeinsamen Sperrklinke vorgesehen ist.

4. Akku-Halterung nach einem der vorausgehenden Ansprüche, **dadurch gekennzeichnet, dass** der Kontaktschuh (20) eine Kontaktplatte (22) durchquerende Kontaktfedern umfasst, die die elektrischen Anschlüsse (26) bilden.

5. Akku-Halterung nach Anspruch 4, **dadurch gekennzeichnet, dass** der Führungsschuh (40) unabhängige Kontaktfedern (74) der elektrischen Anschlüsse (26) des Kontaktschuhs (20) umfasst, die so ausgelegt sind, dass sie mit diesen elektrischen Anschlüssen in Kontakt kommen.

6. Akku-Halterung nach einem der vorausgehenden Ansprüche, **dadurch gekennzeichnet, dass** sie parallele Gleitschienen (62) zur Verbindung von Kontaktschuh (20) und Führungsschuh (40) umfasst.

7. Akku-Halterung nach einem der vorausgehenden Ansprüche, **dadurch gekennzeichnet, dass** der Führungsschuh (40) einen elektronischen Schaltkreis (66) umfasst, der so ausgelegt ist, dass er die vom Akku (44) abgegebene Spannung anpassen kann.

8. Akku-Halterung nach Anspruch 7, **dadurch gekennzeichnet, dass** der elektronische Stromkreis (66) einen manuellen Umschalter umfasst, der so ausgelegt ist, dass er die abgegebene Spannung anpassen kann.

9. Akku-Halterung nach Anspruch 7, **dadurch gekennzeichnet, dass** der elektronische Stromkreis (66) ein automatisches Mittel zur Anpassung der abgegebenen Spannung umfasst.

10. Akku-Halterung nach einem der vorausgehenden Ansprüche, **dadurch gekennzeichnet, dass** der Führungsschuh (40) eine Anzeigevorrichtung (68) umfasst, die zur Anzeige der an das spezifische Werkzeug abgegebenen Spannung ausgelegt ist.

11. Akku-Halterung nach einem der vorausgehenden Ansprüche, **dadurch gekennzeichnet, dass** der Führungsschuh (40) einen Stromstecker (78) umfasst, der den Anschluss eines Akku-Ladegeräts (44) ermöglicht und das Werkzeug (2) in Abwesenheit des Akkus mit Strom versorgt.

12. Mit einem wieder aufladbaren Akku (44) funktionierendes, tragbares Elektrowerkzeug, **dadurch gekennzeichnet, dass** es eine Akku-Halterung nach einem der vorausgehenden Ansprüche umfasst.

## Claims

1. A battery mount provided for supplying a specific portable electric tool (2) with a rechargeable battery (44), comprising a shoe (40) provided for holding the battery (44), and a specific contact base (20) equipped with electrical connections (26) that pass therethrough, **characterised in that** the contact base (20) is removable with respect to the shoe and the shoe is designed to removably attach the battery, which is standard, the base comprising on one side a standard face suitable to fit on the shoe (40), having a first end (28) of the electrical connections (26) coming onto the shoe (40) or onto the standard battery (44), and comprising on the other side a specific face designed to fit on the specific portable electric tool (2), having a second end of the electrical connections (26) configured to come into contact with the terminals of the tool.

2. A battery mount according to claim 1, **characterised in that** the shoe (40) comprises parallel runners (60) provided for receiving and attaching the battery (44).

3. A battery mount according to claim 1 or 2, **characterised in that** the shoe (40) and the contact base (20) each comprise a holding recess (54), these recesses being suitable for receiving a common locking catch.

4. A battery mount according to any of the preceding claims, **characterised in that** the contact base (20) comprises contact blades passing through a base plate (22), forming the electrical connections (26).

5. A battery mount according to claim 4, **characterised in that** the shoe (40) comprises contact blades (74) independent of the electrical connections (26) of the base (20), which are configured to come into contact with these electrical connections.

6. A battery mount according to any of the preceding claims, **characterised in that** it comprises parallel runners (62) for connecting the base (20) to the shoe (40).

7. A battery mount according to any of the preceding claims, **characterised in that** the shoe (40) comprises an electronic circuit (66) configured to effect an adaptation of a voltage delivered by the battery (44).

8. A battery mount according to claim 7, **characterised in that** the electronic circuit (66) comprises a manual selector configured to effect the adaptation of the voltage delivered.

9. A battery mount according to claim 7, **characterised in that** the electronic circuit (66) comprises an automatic means for adapting the voltage delivered.

10. A battery mount according to any of the preceding claims, **characterised in that** the shoe (40) comprises a display (68) configured to display the voltage delivered to the specific tool (2).

11. A battery mount according to any of the preceding claims, **characterised in that** the shoe (40) comprises an electrical socket (78) configured to allow the connection of a charger for the battery (44), which supplies the tool (2) in the absence of a battery.

12. A portable electric tool using a rechargeable battery (44), **characterised in that** it comprises a battery mount according to any of the preceding claims.
